# NEW EUROPEAN PATENT SPECIFICATION

(11) **EP 0 674 195 B2**
(45) Date of publication and mention of the opposition decision: **20.07.2005**
(45) Mention of the grant of the patent: 12.06.2002
(21) Application number: 95103664.9
(22) Date of filing: 14.03.1995
(51) Int. Cl.: G02B 6/38

(54) **An optical waveguide plug assembly**
Lichtwellenleitersteckeranordnung
Assemblage de fiche à guide d'onde optique

(30) Priority: 25.03.1994 DE 4410444
(43) Date of publication of application: 27.09.1995
(73) Proprietor: FCI, 78000 Versailles (FR)
(72) Inventor: May, Guntram, D-90518 Altdorf (DE); Besler, Martin, D-90489 Nürnberg (DE)
(74) Representative: Beetz & Partner Patentanwälte

(56) References cited:
- EP-A- 0 152 225
- EP-A- 0 177 937
- EP-A1- 0 232 754
- DE-A- 2 926 575
- DE-U- 8 332 912
- FR-A- 2 421 395
- GB-A- 2 040 062
- US-A- 2 147 356
- US-A- 4 613 199
- US-A- 4 695 124
- PATENT ABSTRACTS OF JAPAN vol. 010, no. 041 (P-429), 18 February 1986 & JP-A-60 186811 (TOYOTA JIDOSHA KK;OTHERS: 01), 24 September 1985,
- B.LINCOLN ET AL: "Mechanical Fastening of Plastics (An Engineering Handbook)" 1984 , MARCEL DEKKER INC , NEW YORK XP002013700 * page 27; figure 2.7 *
- Ernst, Wörterbuch der industriellen Technik, Band II, English-Deutsch, 6. Auflage, Oscar Brandstetter-Verlag, Wiesbaden, Seiten 1197 bis 1198
- Enzyklopädie Naturwissenschaft und Technik, 1981, Verlag Moderne Industrie, Müunchen, Seiten 3853 bis 3855

## Description

This invention relates to an optical waveguide plug assembly. Optical waveguide plugs of this kind are required to connect optical waveguide cables to equipment in which the light signals are converted, amplified, transmitted or processed. Optical waveguide plugs are required in large numbers in systems operating with light signals, so that if it is possible to reduce the costs of manufacture of such plugs it will have a considerable effect on the overall costs of such a system. To enable a large number of plugs to be accommodated in the minimum amount of space the plugs must not occupy too much space. Also, they must be of robust design for frequent plug-in and pull-out loading, and ensure high resistance to tearing out.

In addition, the precision of construction, and particularly the contact of the end face of the optical waveguide on a corresponding companion element, are required to meet high specifications in order not to cause attenuation losses in the optical waveguide core end.

A number of different methods have already been adopted to solve the above requirements. For example, multipart metal optical waveguide plugs are known which are similar in construction to coaxial cables known in electronics. Their construction from a plurality of parts screwed together by way of screwthreads is very complicated and miniaturisation is practically impossible because of the fact that the screw connections are not easy to handle.

In addition, plastic optical waveguide plugs are known wherein the cable end is partially stripped, the stripped part is passed through a bore in defined relationship as far as the front end of the plug, and wherein the plug is secured to the cable in the rear part of the plug. In a known optical waveguide plug system this fixing is by means of double clamping yokes made of metal, which are inserted into slots provided for the purpose in the plug casing in orderto pinch or cut into the sheathing of the optical waveguide cable between their limbs, at two spaced points of the cable. The disadvantage of these plugs is that they consist of a plurality of parts, and this renders production expensive, limits miniaturisation as a result of the metal clamps, while in addition the high pinching stress on the optical waveguide core at the clamping points does not prevent changes of the interface layer between the core and the sheathing such as is essential for multiple reflection and hence light transport, and consequently attenuation losses occur.

Abstract of JP-A-60186811 discloses an optical connector comprising a ferrule having at least a part of its inner surface made uneven and directly engaging to the projecting part of the uneven section with a clad of the plastic-clad optical fiber. Further to the plastic-clad two other outer sheaths are provided together with strengthening fibers, which are wrapped over the outer sheath within the ferrule. Apart of the serrations gripped directly into the plastic-cladding of the optical fiber another part attacks the strengthening fibers laying on the outer surface of the outer protective sheath. This is done to prevent a displacement of the end face of the strand within the connector due to the difference in the coefficient of thermal expansion of the core and the sheath.

US 2,147,356 describes a contracted sleeve hose coupling. The hose comprises separate layers, one of them is a wire braid reinforcement to strengthen the hose against radial forces. The sleeve comprises at its inner wall surface circumferentially spaced apart teeth biting into the outer layer of the hose to fix them. The teeth are asymmetrical in section in order to raise the pull-out force of the hose. Due to the wire braid reinforcement of the hose, radial forces are not further transmitted to the inner wall of the hose, which local deformation is uncritical in this context.

Further, the radial forces during crimping the hose are considerably high due to the deformation of the outer sheath material which has to be brought into the shape of the space between the sheath to achieve the desired crimping depth which goes down to the wire braid reinforcement. Such radial forces would be unacceptable for the crimping of an optical fiber cable due to the high impact on the fiber.

EP 0 152 225 A3 describes a plastic optical fiber cord with a ferrule. Such a ferrule corresponds to the plug as described in the preamble portion of patent claim 1. The serrations biting into the plastic sheath of the optical fiber cord are not further specified. Especially, their section and the space between the serrations, which are important features as to the radial impact on the optical fibers while crimping, are not described in detail.

The object of this invention is so to improve an optical waveguide plug assembly as to require considerable tear-out forces, make it inexpensive to manufacture, highly suitable for miniaturisation, while preventing any adverse effect on the optical properties of the optical waveguide in the plug zone.

This problem is solved by the claims.

The subclaims refer to preferred embodiments of the optical waveguide plug assembly according to the invention.

The optical waveguide plug is preferably made in one piece from plastics, this having a positive influence on costs and ease of handling.

Clamping is distributed over a relatively large zone of the optical waveguide cable outer surface, thus guaranteeing high tear-out forces while providing non-damaging support.

The construction of the optical waveguide plugs allows rational and, if required, automated or manual cable installation.

The invention is explained in detail below with reference to one exemplified embodiment and the drawing, the exemplified embodiment having no limiting force. In the drawing:
Fig. 1 is a partial longitudinal section of one exemplified embodiment of the optical waveguide plug before beeing crimped.
Fig. 2 shows the optical waveguide plug of Fig. 1 after crimping.

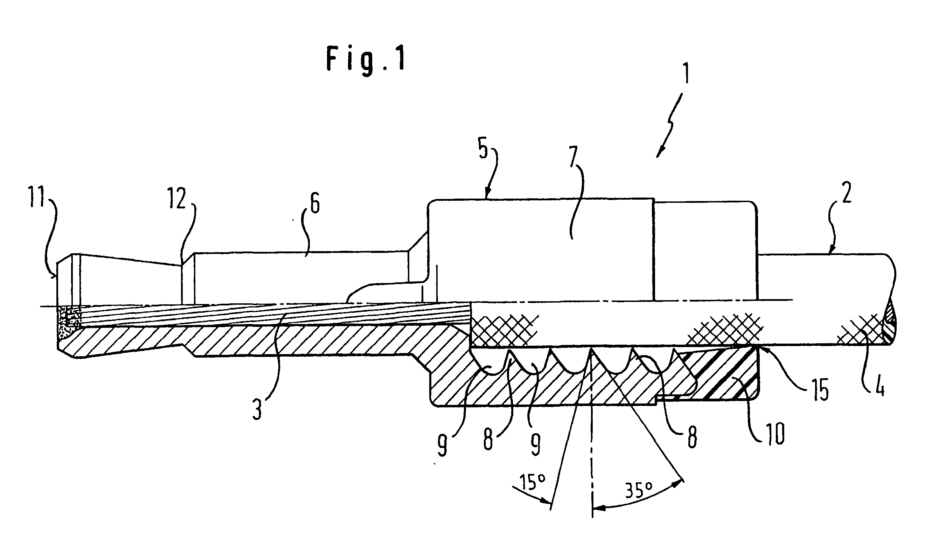

Fig. 1 illustrates one embodiment of an optical waveguide plug 1 before beeing crimped.

The right-hand part of the drawing shows a sheathed optical waveguide cable 2 onto which the plug is pushed. Its end zone is stripped. The stripped fibre core 3 is taken as far as the end of the plug 1 through a cylindrical opening in the segment 6 thereof. Here the core end is fused positively by hot plate technique to the plug 1, which widens out at the plug segment end 6. This also increases the tensile strength of the plug connection.

In this exemplified embodiment the plug segment 6 is tubular so that its outer surface is also cylindrical.

Clamping elements are provided in the clamping segment 7 of the optical waveguide plug, on the inner wall situated opposite the surface of the optical waveguide cable sheathing 4. In longitudinal section these clamping elements constitute a serration 8. The serration 8 are in the form of a screwthread, and this gives certain advantages in the removal of the cast plug 1 from the mould.

The important point is that crimping of the clamping segment 7 on the optical waveguide sheathing 4 results in a pinching of the sheath material at a number of places distributed over the sheath surface 4 of the optical waveguide cable, the peripheral material displaced by the serration 8 being capable of accommodation in sufficiently large recesses 9 between the serrations 8.

The flanks of the serration 8 are asymmetrical in respect of inclination transversely of the cable axis. In this way greater retaining forces are achieved if the flank of each serration rib 8 situated towards the head end of the plug 1 occupies a small angle transversely of the cable axis, whereas the corresponding angle on the side towards the cable is larger. A value of about 15° has proved satisfactory for the first angle and about 35° for the second angle.

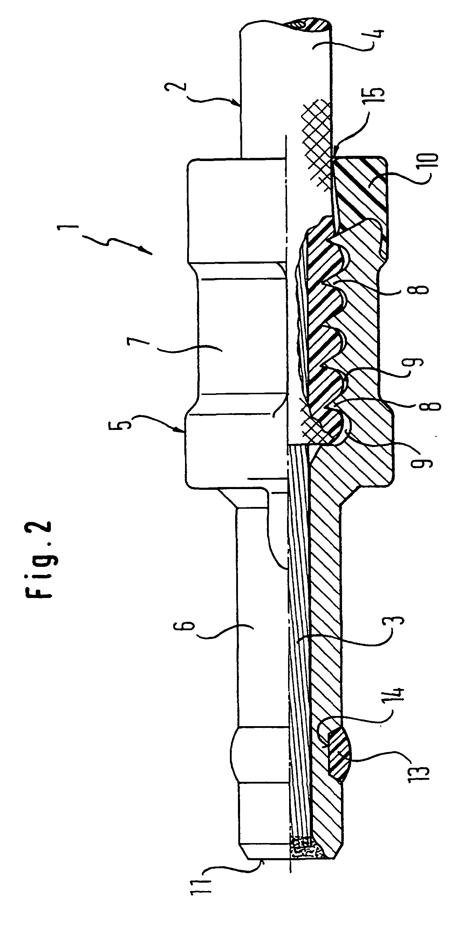

Fig. 2 shows the plug 1 of Fig. 1 after crimping. This means that an appropriate tool has constricted the plug material in the clamping segment 7 either by cross-crimping or hexagonal crimping. It will be clearly seen that the material of the sheathing 4 has been displaced by the tips of the burrs of the serrations 8 and has been bulgingly displaced into the recesses 9 between the ribs. The large number of points of engagement of the serrations 8 on the surface 4 of the sheathing causes a pressure distributed over a relatively large area to be applied to the cable sheath 4, thus avoiding intensely local pinching effects which might be transmitted from the sheath 4 to the core 3.

In the exemplified embodiment illustrated, a silicone spring 10 is positively applied to the cable entry end of the plug 1. In a casing (not shown), it serves to ensure that the end face of the plug 11 is pressed onto an appropriate contact surface by bearing against a corresponding back wall.

Sealing rings 13 can be recessed into grooves 14 provided for the purpose on the plug segment 6, which is cylindrical here, or a groove 12 with flat side walls can be provided to form the plug 1 as a jack plug. The above-described embodiment of the optical waveguide plug according to the invention is particularly suitable for production from plastic material by injection moulding. However, it is also possible to make such plugs from not too hard a metal, e.g. brass, particularly in the case of advanced miniaturisation. Here again crimping is possible.

The present invention is equally suitable for multiple plugs in which two or more optical waveguide cables are mounted side by side in a plug casing.

## Claims

1. An optical waveguide plug assembly comprising a plug casing (5) crimped onto an optical waveguide cable (2) the plug having a plug segment (6) and a clamping segment (7) fixing the optical waveguide cable (2) to the plug (1), the clamping segment (7) having several serrations for being fixed to the optical waveguide cable, wherein
the serrations (8) are in the form of an internal screwthread which is pressed into the optical waveguide sheathing and extends around the optical waveguide axis and has an asymmetric substantially triangular cross section, the flank facing the front end of the plug being inclined at a small angle of about 15° relative to a plane perpendicular to the cable axis and the rear flank at a larger angle of about 35° and wherein between the serrations (8) recesses (9) receiving the sheathing material displaced by the crimping are provided, the sheathing material being bulgingly displaced into the recesses but not filling up the recesses, said recesses (9) being formed with rounded bottoms connecting the flanks of adjacent serrations (8).

2. An optical waveguide plug assembly according to claim 1, **characterised in that** the plug casing (5) is made of plastic.

3. An optical waveguide plug assembly according to claim 1, **characterised in that** the plug casing (5) is made of metal.

4. An optical waveguide plug assembly according to claim 1, **characterised in that** the clamping segment (7) has a cylindrical outer surface and the crimping is a hexagonal or cross-crimping.

5. An optical waveguide plug assembly according to any one of claims 1 to 4, **characterised in that** a silicone spring (10) or anti-buckle bush is positively secured to the cable end of the plug (1).

6. An optical beam waveguide plug assembly according to any one of claims 1 to 5, **characterised in that** the plug segment (6) is cylindrical and the optical waveguide core end (11) is positively adapted by a hot plate technique to a widening of the inside diameter of the plug segment (6).

7. An optical waveguide plug assembly according to any one of the preceding claims, **characterised in that** a detent groove (12) is provided on the plug segment (6) to form a jack plug.

8. An optical waveguide plug assembly according to any one of the preceding claims, **characterised in that** a sealing ring (13) is disposed in a groove (14) on the plug segment (6).

9. An optical waveguide plug assembly according to any one of the preceding claims, **characterised in that** the clamping segment (7) and the plug segment (6) are made in one piece.

## Patentansprüche

1. Lichtwellenleitersteckeranordnung mit einem Steckergehäuse (5), das auf ein LWL-Kabel (2) gecrimpt ist, wobei der Stecker ein Steckersegment (6) und ein Klemmsegment (7) aufweist, das das LWL-Kabel (2) am Stecker (1) befestigt, wobei das Klemmsegment (7) mehrere Verzahnungen zur Befestigung am LWL-Kabel aufweist, wobei
die Verzahnungen (8) die Form eines inneren Schraubengewindes haben, welches in die Ummantelung des LWL-Kabels gepresst wird, um die Achse des Lichtwellenleiters verläuft und einen im Wesentlichen dreieckigen, asymmetrischen Querschnitt aufweist, wobei die dem vorderen Ende des Steckers zugewandte Flanke mit einem kleinen Winkel von etwa 15 ° und die hintere Flanke mit einem größeren Winkel von etwa 35 ° in Bezug auf eine Ebene senkrecht zur Kabelachse geneigt ist, und wobei zwischen den Verzahnungen (8) Vertiefungen (9) vorgesehen sind, die das durch das Crimpen verdrängte Ummantelungsmaterial aufnehmen, wobei das Ummantelungsmaterial ausbuchtend in die Vertiefungen gedrängt wird, diese aber nicht vollständig ausfüllt und die Vertiefungen (9) mit abgerundeten Böden ausgeformt sind, welche die Flanken der benachbarten Verzahnungen (8) verbinden.

2. Lichtwellenleitersteckeranordnung nach Anspruch 1, **dadurch gekennzeichnet, dass** das Steckergehäuse (5) aus Kunststoff ist.

3. Lichtwellenleitersteckeranordnung nach Anspruch 1, **dadurch gekennzeichnet, dass** das Steckergehäuse (5) aus Metall ist.

4. Lichtwellenleitersteckeranordnung nach Anspruch 1, **dadurch gekennzeichnet, dass** das Klemmsegment (7) eine zylindrische Außenfläche aufweist, und die Crimpung eine Sechskant- oder Kreuzcrimpung ist.

5. Lichtwellenleitersteckeranordnung nach einem der Ansprüche 1 bis 4, **dadurch gekennzeichnet, dass** eine Silikonfeder (10) oder Knickschutzhülle durch Formschluss am kabelseitigen Ende des Steckers (1) befestigt ist.

6. Lichtwellenleitersteckeranordnung nach einem der Ansprüche 1 bis 5, **dadurch gekennzeichnet, dass** das Steckersegment (6) zylindrisch ist, und das LWL-Kernende (11) durch Hot-Plate-Technik formschlüssig an eine Aufweitung des Innendurchmessers des Steckersegments (6) angepasst ist.

7. Lichtwellenleitersteckeranordnung nach einem der vorstehenden Ansprüche, **dadurch gekennzeichnet, dass** eine Rastnut (12) auf dem Steckersegment (6) vorgesehen ist, um einen Klinkenstecker zu bilden.

8. Lichtwellenleitersteckeranordnung nach einem der vorstehenden Ansprüche, **dadurch gekennzeichnet, dass** ein Dichtring (13) in einer Nut (14) auf dem Steckersegment (6) angeordnet ist.

9. Lichtwellenleitersteckeranordnung nach einem der vorstehenden Ansprüche, **dadurch gekennzeichnet, dass** das Klemmsegment (7) und das Steckersegment (6) einstückig ausgeführt sind.

## Revendications

1. Assemblage de fiche pour guide d'ondes optiques comprenant un boîtier à fiche (5) serti sur un câble pour guide d'ondes optiques (2), la fiche ayant un segment de fiche (6) et un segment de serrage (7) fixant le câble pour guide d'ondes optiques (2) à la fiche (1), le segment de serrage (7) ayant plusieurs dentelures pour être fixé au câble pour guide d'ondes optiques,
dans lequel
les dentelures (8) se présentent sous la forme d'un filetage interne qui est enfoncé dans la gaine du guide d'ondes optiques et s'étend autour de l'axe du guide d'ondes optiques et a une section transversale asymétrique essentiellement triangulaire, le flanc face à l'extrémité frontale de la fiche étant incliné d'un petit angle d'environ 15° par rapport à un plan perpendiculaire à l'axe du câble et le flanc arrière d' un angle plus grand d'environ 35° et
dans lequel
on a prévu entre les dentelures (8) des évidements (9) pour recevoir la matière de la gaine déplacée par le sertissage, la matière de la gaine étant déplacée dans les évidements par renflement, mais sans remplir complètement ces évidements, lesdits évidements (9) étant formés avec des parties inférieures arrondies reliant les flancs des dentelures adjacentes (8).

2. Assemblage de fiche pour guide d'ondes optiques conformément à la revendication 1, **caractérisé en ce que** le boîtier à fiche (5) est fabriqué en plastique.

3. Assemblage de fiche pour guide d'ondes optiques conformément à la revendication 1, **caractérisé en ce que** le boîtier à fiche (5) est fabriqué en métal.

4. Assemblage de fiche pour guide d'ondes optiques conformément à la revendication 1, **caractérisé en ce que** le segment de serrage (7) a une surface externe cylindrique et que le sertissage est un sertissage hexagonal ou croisé.

5. Assemblage de fiche pour guide d'ondes optiques conformément à l'une quelconque des revendications 1 à 4, **caractérisé en ce qu'**un ressort en silicone (10) ou un manchon anti-flambage est fixé positivement sur l'extrémité du câble de la fiche (1).

6. Assemblage de fiche pour guide d'ondes optiques conformément à l'une quelconque des revendications 1 à 5, **caractérisé en ce que** le segment de fiche (6) est cylindrique et que l'extrémité du coeur du guide d'ondes optiques (11) est adaptée positivement, par la technique de pressage à chaud, à un élargissement du diamètre intérieur du segment de fiche (6).

7. Assemblage de fiche pour guide d'ondes optiques conformément à l'une quelconque des revendications précédentes, **caractérisé en ce qu'**une rainure de cliquet (12) est prévue dans le segment de fiche (6) pour former une fiche de jack.

8. Assemblage de fiche pour guide d'ondes optiques conformément à l'une quelconque des revendications précédentes, **caractérisé en ce qu'**un anneau de fixation (13) est disposé dans une rainure (14) sur le segment de fiche (6).

9. Assemblage de fiche pour guide d'ondes optiques conformément à l'une quelconque des revendications précédentes, **caractérisé en ce que** le segment de serrage (7) et le segment de fiche (6) sont fabriqués en une seule pièce.
